# EUROPÄISCHE PATENTSCHRIFT

(11) **EP 2 727 720 B1**
(45) Veröffentlichungstag und Bekanntmachung des Hinweises auf die Patenterteilung: **14.09.2016**
(21) Anmeldenummer: 12191505.2
(22) Anmeldetag: 06.11.2012
(51) Int. Cl.: B32B 7/02, B32B 15/01, C22C 21/10, C22C 21/16, C22F 1/053

(54) **Verbundwerkstoff und Verfahren zur Wärmebehandlung eines Verbundwerkstoffs**
Compound material and method for heat treating the same
Matière première composite et procédé destiné au traitement thermique d'une matière première composite

(43) Veröffentlichungstag der Anmeldung: 07.05.2014
(73) Patentinhaber: AMAG rolling GmbH, 5282 Braunau am Inn-Ranshofen (AT)
(72) Erfinder: Oberhauser, Paul, 5164 Seeham (AT); Hanko, Gerhard, 84359 Simbach am Inn (DE); Pulm, Peter, 8700 Leoben (AT)
(74) Vertreter: Jell, Friedrich

(56) Entgegenhaltungen:
- EP-A1- 2 156 945
- DE-T2- 60 100 724
- J.E. Hatch: "Aluminium - Properties and Physical Metallurgy", 1984, ASM, USA, XP002696829, Seiten 372-373, * Seite 372 - Seite 373 *
- PAGLIA C S ET AL: "THE INFLUENCE OF ARTIFICIAL AGING ON THE MICROSTRUCTURE, MECHANICAL PROPERTIES, CORROSION, AND ENVIRONMENTAL CRACKING SUSCEPTIBILITY OF A 7075 FRICTION-STIR-WELD", MATERIALS AND CORROSION - WERKSTOFFE UND KORROSION, WILEY-VCH, WEINHEIM, DE, Bd. 58, Nr. 10, 1. Oktober 2007 (2007-10-01), Seiten 737-750, XP001510422, ISSN: 0947-5117, DOI: 10.1002/MACO.200704063

## Beschreibung

Die Erfindung betrifft einen Verbundwerkstoff und ein Verfahren zur Wärmebehandlung eines Verbundwerkstoffs, der einen aushärtbaren Grundwerkstoff auf Al-Zn-Mg-Basis und eine auf dem Grundwerkstoff vorgesehene, nicht aushärtbare Plattierung auf Al-Zn-Basis aufweist, bei dem der Verbundwerkstoff wenigstens bereichsweise lösungsgeglüht und, insbesondere beschleunigt, abgekühlt und ausgelagert wird.

Aus dem Stand der Technik sind korrosionsbeständige Verbundwerkstoffe bekannt (z.B.: 7008 Alclad 7075 Sheet and Plate), die einen aushärtbaren Grundwerkstoff auf Al-Zn-Mg-Cu-Basis und eine auf diesem Grundwerkstoff vorgesehene naturharte (nicht aushärtbare) Plattierung auf Al-Zn-Basis aufweisen. Zwischen dem AA 7075 Grundwerkstoff (AlZn5,5MgCu: elektrochemisches Potential nach T6 Wärmebehandlung ca. -740 mV/SCE) und der AA 7072 Plattierung (AlZn1: elektrochemisches Potential nach T6 Wärmebehandlung ca. -860 mV/SCE) bildet sich eine elektrochemische Potentialdifferenz von ca. 120 mV aus. Diese Potentialdifferenz liegt im vorgeschlagenen Bereich zwischen 60 mV und 130 mV, um damit einem edleren Grundwerkstoff einen ausreichenden kathodischen Schutz zu verleihen (DE60100724T2). Werden derartige Verbundwerkstoffe durch Verlöten und/oder Verschweißen wärmebehandelt, was neben einem Lösungsglühen und Abkühlen auch ein Kaltauslagern bzw. Kaltaushärten mitumfasst, zeigte sich eine erhöhte Gefahr an Korrosion an der Grenzfläche zwischen Grundwerkstoff und Plattierung. Eine Beeinträchtigung der chemischen und mechanischen Eigenschaften durch Delamination der Plattierung konnte festgestellt werden.

Die Erfindung hat sich daher ausgehend vom eingangs geschilderten Stand der Technik die Aufgabe gestellt, ein Verfahren zur Wärmebehandlung eines Verbundwerkstoffs zu schaffen, mit dem höchste chemische und mechanische Eigenschaften des Verbundwerkstoffs sichergestellt bzw. erreicht werden können.

Die Erfindung löst die gestellte Aufgabe dadurch, dass die Mischkristallmatrix des Grundwerkstoffs durch Kaltauslagern, insbesondere durch Ausbildung von MgZn₂-Phasen, derart an Zink verarmt und der Grundwerkstoff damit edler wird, dass sich damit zwischen der Plattierung und dem gegenüber der Plattierung edleren Grundwerkstoff eine elektrochemische Potentialdifferenz von 40mV bis 130mV einstellt.

Wird die Mischkristallmatrix des Grundwerkstoffs durch Kaltauslagern an Zink verarmt, kann mit Änderungen in der elektrochemischen Potentialdifferenz zwischen Grundwerkstoff und Plattierung gerechnet werden, da die verbleibende Matrix des Grundwerkstoffs edler wird. Da die Mischkristallmatrix durch Kaltaushärten derart an Zink verarmt wird, dass sich damit zwischen der Plattierung und dem gegenüber der Plattierung edleren Grundwerkstoff eine elektrochemische Potentialdifferenz von 40mV bis 130mV einstellt, kann sichergestellt werden, dass die Wärmbehandlung zu einer gewünschten elektrochemischen Potentialdifferenz zwischen Grundwerkstoff und Plattierung führen kann - beispielsweise durch Variation der Parameter des Kaltauslagerns oder durch Wahl der Zusammensetzungen von Grundwerkstoff und/oder Plattierwerkstoff. Die erfindungsgemäße Wärmebehandlung, die nach dem Lösungsglühen und Abkühlen, insbesondere Abschrecken, ein Kaltauslagern vorsieht, um damit den Grundwerkstoff zu veredeln, kann daher am Verbundwerkstoff höchsten chemische Widerstandsfähigkeit sicherstellen. Eine Delamination der Plattierung vom Grundwerkstoff ist daher nicht zu befürchten, was eine gleichbleibende mechanische Stabilität gewährleistet. Dies auch dann, wenn dieser Verbundwerkstoff einem Schweißverfahren und/oder Lötverfahren, insbesondere einem Hartlöten, unterzogen wird und die stoffschlüssige Verbindung nach dem Fügen abkühlt und dann kaltaushärtet bzw. kaltausgelagert wird. Zudem hat sich als besonders vorteilhaft die Ausbildung von MgZn₂-Phasen herausgestellt, weil damit zusätzlich zur Veredlung des Grundwerkstoffs auch dessen Festigkeit erhöht werden kann. Hierzu kann sich ein Verhältnis von Zn:Mg von größer 2 als vorteilhaft herausstellen. Das erfindungsgemäße Verfahren führt daher am Verbundwerkstoff nicht nur zu einer vergleichsweise hohen chemischen, sondern auch mechanischen Widerstandsfähigkeit, wodurch sich das erfindungsgemäße Verfahren gegenüber jenen des Stands der Technik auszeichnen kann.

Im Allgemeinen wird erwähnt, dass die angegebenen Potentiale beispielsweise in der Plattierung und im Grundwerkstoff nach der Norm ASTM G69 in Bezug auf eine gesättigte Kalomelelektrode (englisch: Saturated Calomel Electrode (SCE)) bestimmt wurden.

Vorteilhafte Eigenschaften am Verbundwerkstoff können erzielt werden, indem eine elektrochemische Potentialdifferenz von mindestens 50mV eingestellt wird. Eine elektrochemische Potentialdifferenz von 80mV kann sich als zu bevorzugen herausstellen, um den Grundwerkstoff gegenüber Korrosion besonders gut zu schützen.

Wird die Mischkristallmatrix des Grundwerkstoffs ausgehend von einer elektrochemischen Potentialdifferenz zwischen Plattierung und Grundwerkstoff von kleiner 40mV an Zink verarmt, kann ein erhöhter Spielraum in der Veredelungsfähigkeit des Grundwerkstoffs genutzt werden, die Festigkeit des Grundwerkstoffs und damit auch des Verbundwerkstoffs zu erhöhen. Die Mischkristallmatrix des Grundwerkstoffs kann nämlich an Zink verstärkt verarmt werden, ohne dadurch befürchten zu müssen, durch die Wärmebehandlung in einen unerwünscht hohen Bereich der Potentialdifferenz zu gelangen. Letzteres kann auch die Verfahrenssicherheit erheblich steigern, zumal handhabungsbedingt beim Löten mit unterschiedlich hohen Temperaturverhältnissen zu rechnen ist.

Weisen vor der Wärmebehandlung des Verbundwerkstoffs der Grundwerkstoff und die Plattierung ein im Wesentlichen gleiches elektrochemisches Potential auf, kann sich die Reproduzierbarkeit des Verfahrens noch weiter verbessern. Beispielsweise zeigte sich ein AlZn2,7Mg1 Grundwerkstoff mit einer AlZn2,7 Plattierung für ein Hartlöten äußerst geeignet. Hervorragende Korrosionsbeständigkeit und höchste Festigkeit kann damit sichergestellt werden.

Wird der Verbundwerkstoff im Zuge eines Verlötens und/oder Verschweißens wenigstens bereichsweise lösungsgeglüht, kann über das stoffschlüssige Fügen ein Teil der Wärmebehandlung durchgeführt werden. Hinsichtlich dem Lösungsglühen und dem beschleunigten Abkühlen bzw. Abschrecken können sich so vereinfachte Verfahrensverhältnisse ergeben.

Ein einfaches Lötverfahren kann sich ergeben, wenn der Verbundwerkstoff eine auf die Plattierung aufgebrachte, insbesondere aufplattierte, Lotschicht, insbesondere Hartlotschicht, aufweist. Zudem kann die Plattierung eine Diffusionsbarriere zwischen Lotschicht und Grundwerkstoff ausbilden, um beim Löten den Grundwerkstoff gegen unerwünschte Elemente abzuschirmen, die beispielsweise aus der geschmolzenen Lötlegierung kommen können. Dies kann gerade bei einer Lotschicht auf Al-Si-Basis von Vorteil sein, um im Grundwerkstoff MgSi-Phasen mit vergleichsweise hoher Elektronegativität zu vermeiden und die Korrosionsbeständigkeit des Verbundwerkstoffs nicht zu gefährden.

Weist der Grundwerkstoff maximal 0,3 Gew.-% Kupfer (Cu) auf, kann beim Grundwerkstoff die Gefahr von niedrigschmelzenden Phasen, die bei einer Wärmebehandlung, insbesondere beim Löten, aufschmelzen können, gering gehalten werden. Die Reproduzierbarkeit des Verfahrens kann verbessert werden, insbesondere wenn dieses ein stoffschlüssiges Fügen mitumfasst. Ein zugelassener geringer Kupfergehalt, insbesondere von 0,1 bis 0,2 Gew.-%, kann jedoch das Korrosionsbeständigkeit des Verbundwerkstoffs verbessern.

Die Erfindung hat sich außerdem die Aufgabe gestellt, einen Verbundwerkstoff, insbesondere plattiertes Blech auf Al-Basis, mit einem aushärtbaren Grundwerkstoff auf Al-Zn-Mg-Basis und mit einer am Grundwerkstoff vorgesehenen nicht aushärtbaren Plattierung auf Al-Zn-Basis zu schaffen, der vorteilhafte chemische und mechanische Eigenschaften, insbesondere in Bezug auf hohe Korrosionsbeständigkeit und hohe Festigkeit, aufweisen kann, die sich unter den Bedingungen eines Lötens und/oder eines Schweißens am Verbundwerkstoff ergeben.

Die Erfindung löst die gestellte Aufgabe hinsichtlich des Verbundwerkstoffs dadurch, dass der Grundwerkstoff

| | |
|---|---|
| 1 bis 2 | Gew.-% Magnesium (Mg), |
| 2 bis 4,5 | Gew.-% Zink (Zn), |
| maximal 0,3 | Gew.-% Kupfer (Cu) |
| optional | |
| bis 0,4 | Gew.-% Eisen (Fe), |
| bis 0,35 | Gew.-% Silizium (Si), |
| bis 0,5 | Gew.-% Mangan (Mn) und/oder |
| bis 0,35 | Gew.-% Chrom (Cr) |

und als Rest Aluminium und herstellungsbedingte Verunreinigungen aufweist, und dass die Plattierung

| | |
|---|---|
| 2 bis 5 | Gew.-% Zink (Zn), |
| maximal 0,3 | Gew.-% Magnesium (Mg) |
| optional | |
| bis 0,1 | Gew.-% Eisen (Fe), |
| bis 0,1 | Gew.-% Silizium (Si) und/oder |
| bis 0,2 | Gew.-% Chrom (Cr), Zirkonium (Zr), Scandium (Sc), Hafnium (Hf), Vanadium(V) und/oder Silber (Ag) |

und als Rest Aluminium und herstellungsbedingte Verunreinigungen aufweist.

Im Allgemeinen wird erwähnt, dass als herstellungsbedingte Verunreinigungen andere Elemente von < 0,05 Gew.-% jeweils und < 0,15 Gew.-% gesamt verstanden werden können.

Weist die Plattierung maximal 0,3 Gew.-% Magnesium (Mg) auf, kann zunächst durch den vergleichsweise niedrigen Mg-Gehalt in der Plattierung eine aushärtungsbedingte ZnMg₂-Phase vermieden werden, sodass das Potential dieser nicht aushärtbaren Plattierung selbst durch ein Kaltaushärten im Wesentlichen gleich bleibt.

Ein in seiner Korrosionsbeständigkeit und Festigkeit besonders hoher Verbundwerkstoff kann geschaffen werden, indem der Grundwerkstoff 1 bis 2 Gew.-% Magnesium (Mg) und 2 bis 4,5 Gew.-% Zink (Zn) aufweist. Damit sind die Gehalte an Magnesium (Mg) und Zink (Zn) im Grundwerkstoff derart zueinander einstellbar, dass der aufgrund einer kaltaushärtungsbedingten Verarmung seiner Mischkristallmatrix an Zink, insbesondere durch Ausbildung von MgZn2 Phasen, edler werdende Grundwerkstoff zu einer elektrochemische Potentialdifferenz zwischen Plattierung und dem gegenüber der Plattierung edleren Grundwerkstoff von 40mV bis 130mV führt. Die Veredelung des aushärtbaren Grundwerkstoffs auf Al-Zn-Mg-Basis durch Kaltaushärtung kann sich damit nämlich in engen Schranken bewegen, um für einen ausreichenden kathodischen Schutz des Grundwerkstoffs zu sorgen. Zudem kann durch Ausbildung von MgZn₂-Phasen auch die Festigkeit des Grundwerkstoffs erhöht werden, was die Standfestigkeit des Verbundwerkstoffs verbessern kann. Erfindungsgemäß kann durch den vorgeschlagenen Mg- und Zn-Gehalt ein Kompromiss zwischen Kaltaushärtbarkeit des Grundwerkstoffs auf der einen Seite und Korrosionsbeständigkeit des Verbundwerkstoffs auf der anderen Seite erreicht werden. Zudem kann ein niedriger Kupfergehalt im Grundwerkstoff von maximal 0,3 Gew.-% vermeiden, dass sich im Grundwerkstoff niederschmelzende Phasen beim Schweißen und/oder Löten des Verbundwerkstoffs ausbilden und damit das stoffschlüssige Fügen beeinträchtigen.
Weist die Plattierung maximal 0,1 Gew.-% Silizium (Si) auf, können vergleichsweise stark unedle Phasen in der Grenzschicht zwischen Plattierung und Grundwerkstoff nahezu vermieden werden, wenn der Verbundwerkstoff einer Wärmebehandlung unterworfen wird. Die Korrosionsbeständigkeit kann weiter verbessert werden, wenn Eisen im Plattierung auf ein niedriges Niveau eingestellt wird, was mit einem diesbezüglichen Gehalt von maximal 0,1 Gew.-% Eisen (Fe) in der Plattierung erreicht werden kann.

Unter anderem kann eine vergleichsweise gute Verlöt- und/oder Verschweißbarkeit des Verbundwerkstoffs ermöglicht werden, wenn die Plattierung 2 bis 4 Gew.-%, insbesondere 2 bis 3 Gew.-%, Zink (Zn) aufweist.

Der Verbundwerkstoff kann sich für ein Kaltauslagern besonders eignen, wenn die Zink-Gehalte des Grundwerkstoffs und der Plattierung gleich sind.

Die Eigenschaften hinsichtlich des der Korrosionsbeständigkeit des Grundwerkstoffs können verbessert werden, indem der Grundwerkstoff mindestens 0,1 Gew.-% Kupfer (Cu) aufweist.

Unerwünschte Ausscheidungen an der Grenzfläche zwischen Plattierung und Grundwerkstoff können weiter reduziert bzw. vermieden werden, indem die Plattierung bis 0,05 Gew.-% Eisen (Fe) und/oder bis 0,05 Gew.-% Silizium (Si) aufweist.

Der Verbundwerkstoff kann sich insbesondere zum Verlöten eignen, wenn dieser eine auf die Plattierung vorgesehene, insbesondere aufplattierte, Lotschicht auf Al-Si-Basis aufweist. Zudem kann die Plattierung als Diffusionsdiaphragma zwischen Lotschicht und Grundwerkstoff genutzt werden.

Im Folgenden wird die Erfindung beispielsweise anhand von Ausführungsbeispielen näher erläutert:
Zum Nachweis der erzielten Effekte wurden verschiedene Verbundwerkstoffe hergestellt. Die Zusammensetzungen der untersuchten Legierungen sind in der Tabelle 1 angeführt.

**Tabelle 1: Übersicht zu den Verbundwerkstoffen**

| Verbundwerkstoff | Grundwerkstoff | Plattierung |
|---|---|---|
| 1 | AlZn4,5Mg (AA 7020) | Al99,5 (AA 1050) |
| 2 | AlZn2,7Mg1 | AlZn2,7 |

Beim Verbundwerkstoff 1 handelt es sich um ein aus dem Stand der Technik bekanntes plattiertes Blech. Der Verbundwerkstoff 2 stellt ein erfindungsgemäßes Ausführungsbeispiel dar. Beide Verbundwerkstoffe wurden verlötet und acht Stunden kaltausgelagert bzw. kaltausgehärtet. Anschließend wurden deren mechanischen Eigenschaften ermittelt, sowie deren Korrosionsbeständigkeit untersucht. Hierzu wurden die Streckgrenze R_{p0,2} im Zugversuch ermittelt und ein SWAAT-Test nach ASTM G85, Annex A3 durchgeführt. Die erhaltenen Messwerte sind in der Tabelle 2 zusammengefasst.

**Tabelle 2: Ergebnisse zu den untersuchten Verbundwerkstoffen**

| Verbundwerkstoff | R_{p0,2}[MPa] | SWAAT Test |
|---|---|---|
| 1 | 140 | nicht erfüllt |
| 2 | 100 | bestanden |

Nach der Tabelle 2 ist ersichtlich, dass der Verbundwerkstoff 1 den SWAAT Test nicht positiv abschließen konnte. Der Grundwerkstoff des Verbundwerkstoffs 1 war bereits angegriffen. Hingegen konnte beim Verbundwerkstoff 2 festgestellt werden, dass der SWAAT Test zwar zu einem gleichmäßigen Angriff der Plattierung führte, der Grundwerkstoff dennoch durch die angegriffene Plattierung kathodisch geschützt ist.

Im Allgemeinen und/oder der Vollständigkeit halber wird erwähnt, dass
- es sich bei einer Aluminiumlegierung auf Al-Zn-Basis oder Al-Zn-Mg-Basis um eine Knetlegierung der 7xxx Legierungsreihe, d. h. mit Zink als Hauptlegierungselement, oder auch um eine Gusslegierung der 7xxxx Reihe (EN AC-7xxxx), d. h. mit Zink als Hauptlegierungselement, handeln kann.
- auch eine Al-Zn-Mg(Cu) Knet- oder Gusslegierung zu einer Aluminiumlegierung auf Al-Zn-Mg-Basis gezählt werden kann.
- durchaus eine Aluminiumlegierung auf Al-Zn-, Al-Zn-Mg-Basis für eine Knet- und/oder Gusslegierung Verwendung finden kann, wobei dabei auch Verbundwerkstoffe, die durch Teilchen oder Fasermaterial verstärkt sind, nicht ausgeschlossen werden.

## Patentansprüche

1. Verbundwerkstoff, insbesondere plattiertes Blech auf AI-Basis, für ein Verfahren zu seiner Wärmebehandlung mit einem aushärtbaren Grundwerkstoff auf Al-Zn-Mg-Basis und mit einer am Grundwerkstoff vorgesehenen nicht aushärtbaren Plattierung auf Al-Zn Basis, **dadurch gekennzeichnet, dass** der Grundwerkstoff
| | |
|---|---|
| 1 bis 2 | Gew.-% Magnesium (Mg), |
| 2 bis 4,5 | Gew.-% Zink (Zn), |
| maximal 0,3 | Gew.-% Kupfer (Cu) |
| optional | |
| bis 0,4 | Gew.-% Eisen (Fe), |
| bis 0,35 | Gew.-% Silizium (Si), |
| bis 0,5 | Gew.-% Mangan (Mn) und/oder |
| bis 0,35 | Gew.-% Chrom (Cr) |
und als Rest Aluminium und herstellungsbedingte Verunreinigungen aufweist, und dass die Plattierung
| | |
|---|---|
| 2 bis 5 | Gew.-% Zink (Zn), |
| maximal 0,3 | Gew.-% Magnesium (Mg) |
| optional | |
| bis 0,1 | Gew.-% Eisen (Fe), |
| bis 0,1 | Gew.-% Silizium (Si) und/oder |
| bis 0,2 | Gew.-% Chrom (Cr), Zirkonium (Zr), Scandium (Sc), Hafnium (Hf), Vanadium(V) und/oder Silber (Ag) |
und als Rest Aluminium und herstellungsbedingte Verunreinigungen aufweist.

2. Verbundwerkstoff nach Anspruch 1, **dadurch gekennzeichnet, dass** die Plattierung 2 bis 4 Gew.-%, insbesondere 2 bis 3 Gew.-%, Zink (Zn) aufweist.

3. Verbundwerkstoff nach Anspruch 1 oder 2, **dadurch gekennzeichnet, dass** die Zink-Gehalte des Grundwerkstoffs und der Plattierung gleich sind.

4. Verbundwerkstoff nach einem der Ansprüche 1 bis 3, **dadurch gekennzeichnet, dass** der Grundwerkstoff mindestens 0,1 Gew.-% Kupfer (Cu) aufweist.

5. Verbundwerkstoff nach einem der Ansprüche 1 bis 4, **dadurch gekennzeichnet, dass** die Plattierung bis 0,05 Gew.-% Eisen (Fe) und/oder bis 0,05 Gew.-% Silizium (Si) aufweist.

6. Verbundwerkstoff nach einem der Ansprüche 1 bis 5, **dadurch gekennzeichnet, dass** der Verbundwerkstoff eine auf der Plattierung vorgesehene, insbesondere aufplattierte, Lotschicht auf Al-Si-Basis aufweist.

7. Verfahren zur Wärmebehandlung eines Verbundwerkstoffs nach einem der Ansprüche 1 bis 6, bei dem der Verbundwerkstoff wenigstens bereichsweise lösungsgeglüht und, insbesondere beschleunigt, abgekühlt und ausgelagert wird, wobei die Mischkristallmatrix des Grundwerkstoffs durch Kaltauslagern, insbesondere durch Ausbildung von MgZn₂-Phasen, derart an Zink verarmt und der Grundwerkstoff damit edler wird, dass sich damit zwischen der Plattierung und dem gegenüber der Plattierung edleren Grundwerkstoff eine elektrochemische Potentialdifferenz von 40mV bis 130mV einstellt.

8. Verfahren nach Anspruch 7, **dadurch gekennzeichnet, dass** eine elektrochemische Potentialdifferenz von mindestens 50mV, bevorzugt 80mV, eingestellt wird.

9. Verfahren nach Anspruch 7 oder 8, **dadurch gekennzeichnet, dass** die Mischkristallmatrix des Grundwerkstoffs ausgehend von einer elektrochemischen Potentialdifferenz zwischen Plattierung und Grundwerkstoff von kleiner 40mV an Zink verarmt wird.

10. Verfahren nach Anspruch 9, **dadurch gekennzeichnet, dass** vor der Wärmebehandlung des Verbundwerkstoffs der Grundwerkstoff und die Plattierung ein im Wesentlichen gleiches elektrochemisches Potential aufweisen.

11. Verfahren nach einem der Ansprüche 7 bis 10, **dadurch gekennzeichnet, dass** der Verbundwerkstoff im Zuge eines Verlötens und/oder Verschweißens wenigstens bereichsweise lösungsgeglüht wird.

12. Verwendung eines Verbundwerkstoffs, insbesondere plattierten Blechs auf Al-Basis, nach einem der Ansprüche 1 bis 6 zum Verlöten oder Verschweißen mit einer anschließenden Kaltaushärtung, wobei die Gehalte an Magnesium (Mg) und Zink (Zn) im Grundwerkstoff derart zueinander eingestellt sind, dass der aufgrund einer kaltaushärtungsbedingten Verarmung seiner Mischkristallmatrix an Zink, insbesondere durch Ausbildung von MgZn₂ Phasen, edler werdende Grundwerkstoff zu einer elektrochemische Potentialdifferenz zwischen Plattierung und dem gegenüber der Plattierung edleren Grundwerkstoff von 40mV bis 130mV führt.

## Claims

1. A composite material, more particularly plated sheet metal based on aluminum, for a method for the heat treatment thereof using a base material, which can be age hardened, based on Al-Zn-Mg, and a plating, which cannot be age hardened and is provided on the base material, based on Al-Zn, **characterized in that** the base material comprises
1 to 2 wt.% magnesium (Mg)
2 to 4.5 wt.% zinc (Zn),
at most 0.3 wt.% copper (Cu),
optionally
up to 0.4 wt.% iron (Fe),
up to 0.35 wt.% silicon (Si),
up to 0.5 wt.% manganese (Mn), and/or
up to 0.35 wt.% chromium (Cr)
and comprises aluminum and production-related impurities as the remainder,
and the plating comprises
2 to 5 wt.% zinc (Zn),
at most 0.3 wt.% magnesium (Mg),
optionally
up to 0.1 wt.% iron (Fe),
up to 0.1 wt.% silicon (Si), and/or
up to 0.2 wt.% chromium (Cr), zirconium (Zr), scandium (Sc), hafnium (Hf), vanadium (V), and/or silver (Ag)
and aluminum and production-related impurities as the remainder.

2. The composite material according to claim 1, **characterized in that** the plating comprises 2 to 4 wt.%, more particularly 2 to 3 wt.% zinc (Zn).

3. The composite material according to claim 1 or 2, **characterized in that** the zinc contents of the base material and the plating are identical.

4. The composite material according to any one of claims 1 to 3, **characterized in that** the base material comprises at least 0.1 wt.% copper (Cu).

5. The composite material according to any one of claims 1 to 4, **characterized in that** the plating comprises up to 0.05 wt.% iron (Fe) and/or up to 0.05 wt.% silicon (Si).

6. The composite material according to any one of claims 1 to 5, **characterized in that** the composite material comprises a solder layer based on Al-Si, which is provided on the plating, more particularly plated on.

7. A method for heat treatment of a composite material according to any one of claims 1 to 6, wherein the composite material is at least regionally solution annealed and cooled down, more particularly in an accelerated manner, and aged, wherein the mixed crystal matrix of the base material is impoverished in zinc by natural aging, more particularly by formation of MgZn₂₋ phases, and the base material thus becomes nobler such that an electrochemical potential difference of 40 mV to 130 mV thus results between the plating and the base material, which is more noble than the plating.

8. The method according to claim 7, **characterized in that** an electrochemical potential difference of at least 50 mV, more particularly 80 mV, is set.

9. The method according to claim 7 or 8, **characterized in that** the mixed crystal matrix of the base material is impoverished in zinc proceeding from an electrochemical potential difference between plating and base material of less than 40 mV.

10. The method according to claim 9, **characterized in that** before the heat treatment of the composite material, the base material and the plating have an essentially equal electrochemical potential.

11. The method according to any one of claims 7 to 10, **characterized in that** the composite material is at least regionally solution annealed in the course of soldering and/or welding.

12. A use of a composite material, more particularly plated sheet metal based on aluminum, according to any one of claims 1 to 6 for soldering or welding with subsequent natural aging, wherein the contents of magnesium (Mg) and zinc (Zn) in the base material are set in relation to one another such that the base material, which becomes more noble as a result of impoverishment, which is caused by natural aging, of its mixed crystal matrix in zinc, more particularly due to formation of MgZn₂ phases, results in an electrochemical potential difference between plating and the base material, which is more noble than the plating, of 40 mV to 130 mV.

## Revendications

1. Matériau composite, en particulier tôle plaquée à base d'aluminium, pour un procédé destiné à son traitement thermique, avec un matériau de base durcissable à base d'alliage Al-Zn-Mg-Basis et avec un placage non durcissable à base d'alliage Al-Zn prévu sur le matériau de base, **caractérisé en ce que** le matériau de base contient
| | |
|---|---|
| de 1 à 2 | % en poids de magnésium (Mg), |
| de 2 à 4,5 | % en poids de zinc (Zn), |
| au maximum 0,3 | % en poids de cuivre (Cu), facultativement |
| jusqu'à 0,4 | % en poids de fer (Fe), |
| jusqu'à 0,35 | % en poids de silicium (Si), |
| jusqu'à 0,5 | % en poids de manganèse (Mn) et/ou |
| jusqu'à 0,35 | % en poids de chrome (Cr), |
le reste étant composé d'aluminium et d'impuretés liées à la fabrication, et **en ce que** le placage contient
| | |
|---|---|
| de 2 à 5 | % en poids de zinc (Zn), |
| au maximum 0,3 | % en poids de magnésium (Mg), facultativement |
| jusqu'à 0,1 | % en poids de fer (Fe), |
| jusqu'à 0,1 | % en poids de silicium (Si) et/ou |
| jusqu'à 0,2 | % en poids de chrome (Cr), de zirconium (Zr), de scandium (Sc), de hafnium (Hf), de vanadium (V) et/ou d'argent (Ag), |
le reste étant composé d'aluminium et d'impuretés liées à la fabrication.

2. Matériau composite selon la revendication 1, **caractérisé en ce que** le placage contient de 2 à 4% en poids, en particulier de 2 à 3 % en poids, de zinc (Zn).

3. Matériau composite selon la revendication 1 ou 2, **caractérisé en ce que** les teneurs en zinc du matériau de base et du placage sont identiques.

4. Matériau composite selon l'une des revendications 1 à 3, **caractérisé en ce que** le matériau de base contient au moins 0,1 % en poids de cuivre (Cu).

5. Matériau composite selon l'une des revendications 1 à 4, **caractérisé en ce que** le placage contient jusqu'à 0,05 % en poids de fer (Fe) et/ou jusqu'à 0,05 % en poids de silicium (Si).

6. Matériau composite selon l'une des revendications 1 à 5, **caractérisé en ce que** le matériau composite présente une couche de brasure à base d'alliage Al-Si prévue sur le placage, en particulier plaquée par-dessus.

7. Procédé pour le traitement thermique d'un matériau composite selon l'une des revendications 1 à 6, dans lequel le matériau composite est mis en solution au moins par zones et refroidi, en particulier de façon accélérée, et durci par précipitation, de sorte que la matrice cristalline mixte du matériau de base est appauvrie en zinc et le matériau de base ainsi affiné par vieillissement naturel, en particulier par la formation de phases MgZn₂, de telle manière qu'il se crée entre le placage et le matériau de base plus affiné que le placage une différence de potentiel électrochimique de 40 mV à 130 mV.

8. Procédé selon la revendication 7, **caractérisé en ce que** la différence de potentiel électrochimique créée est d'au moins 50 mV, de préférence 80 mV.

9. Procédé selon la revendication 7 ou 8, **caractérisé en ce que** la matrice cristalline mixte du matériau de base est appauvrie en zinc à partir d'une différence de potentiel électrochimique de moins de 40 mV entre le placage et le matériau de base.

10. Procédé selon la revendication 9, **caractérisé en ce qu'**avant le traitement thermique du matériau composite, le matériau de base et le placage présentent un potentiel électrochimique sensiblement identique.

11. Procédé selon l'une des revendications 7 à 10, **caractérisé en ce que** le matériau composite est recuit et mis en solution au moins par zones au cours d'un brasage et/ou d'un soudage.

12. Utilisation d'un matériau composite, en particulier d'une tôle plaquée à base d'aluminium, selon l'une des revendications 1 à 6 pour le brasage ou le soudage suivi d'un vieillissement naturel, dans laquelle avec les teneurs en magnésium (Mg) et en zinc (Zn) dans le matériau de base sont ajustées l'une par rapport à l'autre de telle manière qu'à la suite d'un appauvrissement de sa matrice cristalline mixte en zinc causé par le vieillissement naturel, en particulier par la formation de phases MgZn₂, l'affinage du matériau de base crée une différence de potentiel électrochimique de 40 mV à 130 mV entre le placage et le matériau de base plus affiné que le placage.
